# EUROPEAN PATENT SPECIFICATION

(11) **EP 3 432 624 B1**
(45) Date of publication and mention of the grant of the patent: **02.10.2019**
(21) Application number: 17181957.6
(22) Date of filing: 18.07.2017
(51) Int. Cl.: H04W 12/06, H04L 29/08, H04W 12/02, H04W 84/18, H04W 4/00, G06F 21/53

(54) **SECURE DEVICES AND METHODS FOR LPWA COMMUNICATION NETWORKS**
SICHERE VORRICHTUNGEN UND VERFAHREN FÜR LPWA-KOMMUNIKATIONSNETZWERKE
DISPOSITIF DE COMMUNICATION ET PROCÉDÉ DE COMMUNICATION RADIO

(43) Date of publication of application: 23.01.2019
(73) Proprietor: Deutsche Telekom AG, 53113 Bonn (DE); Giesecke+Devrient Mobile Security GmbH, 81677 München (DE)
(72) Inventor: SCHNIEDERS, Dominik, 52078 Aachen (DE); SPITZ, Stephan, 85757 Karlsfeld (DE)
(74) Representative: Braun-Dullaeus Pannen Emmerling Patent- & Rechtsanwaltspartnerschaft mbB

(56) References cited:
- US-A1- 2015 033 291
- US-A1- 2015 189 509

## Description

### TECHNICAL FIELD

In general, the invention relates to wireless communication networks. More specifically, the invention relates to secure devices, methods and systems for wireless communication networks based on Low-Power Wide-Area (LPWA) technology, in particular narrowband IoT communication networks.

### BACKGROUND

Narrowband IoT (NB IoT) is a new technology standard, designed to broaden the future of IoT connectivity. Ratified by the 3GPP, NB IoT is starting to being deployed by mobile network operators across the globe. NB IoT is a Low-Power Wide-Area (LPWA) network technology, developed to enable efficient communication for mass distributed NB IoT communication devices across wide geographical footprints as well in scenarios with deep indoor penetration, e.g. within an urban infrastructure. It's ideal for devices that generate low data traffic, rely on batteries and typically have a long device life cycle. A battery life of more than 10 years can be supported for a wide range of use cases. Moreover, NB IoT significantly improves the system capacity and spectrum efficiency, especially in deep coverage. Thus, NB IoT can be used to connect simple communication devices, such as sensors, to drive new data streams, reduce operational costs and create new business models. Smart Meters, Smart Bins, environmental monitoring and precision agriculture are just a few applications of NB IoT. Such devices are also referred to as NB IoT cellular devices. More information about NB IoT can be found in the 3GPP technical report TR 45.820.

Due to the generally limited hardware resources of a communication device based on LPWA technology and, in particular, NB IoT technology, security mechanisms known, for instance, from smart phones cannot be used for such a communication device. Thus, there is a need for improved devices, methods and systems for wireless communication networks based on LPWA technology, in particular narrowband IoT networks.

US 2015/0189509 A1 discloses a configurable multimode wireless radio transceiver supporting different radio access technologies and implementing different protection domains, which can comprise different radio configuration parameters. The wireless radio transceiver comprises a protection domain controller (PDC) for controlling the different protection domains. The PDC can define the access of a configuration software to one or more of the protection domains for configuring the radio configuration parameters stored therein. The wireless radio transceiver further comprises a radio storage comprising verification keys, on the basis of which the PDC can validate the configuration software.

US 2015/033291 A1 discloses a NFC enabled device, such as a smartphone, comprising a secure element, such as a smart card, with a plurality of secure element partitions, which are allocated to a plurality of card issuers. One or more cryptographic keys can be provided in the secure element partitions, wherein each set of cryptographic keys is unique to one of the card issuers.

### SUMMARY OF THE INVENTION

It is an object of the invention to provide improved devices, methods and systems for wireless communication networks based on LPWA technology, in particular narrowband IOT networks.

The foregoing and other objects are achieved by the subject matter of the independent claims. Further implementation forms are apparent from the dependent claims, the description and the figures.

Embodiments of the present invention relate to communication devices that use NB IoT technology. Although the description is written by using the NB IoT as the access technology, the embodiments are applicable also for communication devices that use other wireless communication technologies as well, such as Global System for Mobile communications (GSM, 2G), GSM EDGE radio access Network (GERAN), General Packet Radio Service (GRPS), Universal Mobile Telecommunication System (UMTS, 3G) based on basic wideband-code division multiple access (W-CDMA), high-speed packet access (HSPA), Long Term Evolution (LTE), LTE-Advanced, and/or 5G system. As used herein, NB IoT technology can comprises, for instance, narrowband LTE, narrowband M2M, and narrowband OFDMA techniques.

In embodiments of the present invention communication devices may be capable of communicating content, data, information and/or signals via a wireless medium or channel. In some embodiments, the wireless medium may include, for example, a radio channel, a cellular channel, an RF channel, a WiFi channel, an IR channel, a Bluetooth (BT) channel, a Global Navigation Satellite System (GNSS) channel, and the like.

In embodiments of the present invention communication devices may include one or more radio modules (or short radios) including circuitry and/or logic to perform wireless communication between the communication devices. In embodiments of the present invention the radio modules may include one or more wireless receivers (Rx) including circuitry and/or logic to receive wireless communication signals, RF signals, frames, blocks, transmission streams, packets, messages, data items, and/or data. In embodiments of the present invention the radio modules may include one or more wireless transmitters (Tx) including circuitry and/or logic to transmit wireless communication signals, RF signals, frames, blocks, transmission streams, packets, messages, data items, and/or data. In embodiments of the present invention, the radio modules may include Radio Frequency (RF) elements, baseband elements, modulation elements, demodulation elements, amplifiers, analog to digital and/or digital to analog converters, filters and the like, which can be implemented in hardware and/or software.

In embodiments of the present invention the radio modules may be configured to communicate according to an OFDM scheme and/or an FDMA scheme in an uplink direction and/or a downlink direction. In other embodiments, the radios of the communication devices may be configured to communicate according to any other additional or alternative modulation scheme. In embodiments of the present invention, the radios may include, or may be associated with, one or more antennas. In one example, a communication device may include a single antenna. In another example, a communication device may include two or more antennas. Such antennas may include any type of antennas suitable for transmitting and/or receiving wireless communication signals, blocks, frames, transmission streams, packets, messages and/or data. The antennas may include, for example, antennas suitable for directional communication, e.g., using beamforming techniques. For example, the antennas may include a phased array antenna, a multiple element antenna, a set of switched beam antennas, and/or the like. In some embodiments, the antennas may implement transmit and receive functionalities using separate transmit and receive antenna elements. In some embodiments, the antennas may implement transmit and receive functionalities using common and/or integrated transmit/receive elements.

In embodiments of the present invention a communication device may include a processor. The processor may be configured to perform and/or to trigger, cause, instruct and/or control the communication device to perform, one or more communications, to generate and/or communicate one or more messages and/or transmissions, and/or to perform one or more functionalities, operations and/or procedures. In embodiments of the present invention the processor control unit may include circuitry and/or logic, Media-Access Control (MAC) circuitry and/or logic, Physical Layer (PHY) circuitry and/or logic, and/or any other circuitry and/or logic, configured to perform the functionality of the processor.

In embodiments of the present invention, at least part of the functionality of the processor may be implemented by an integrated circuit, for example, a chip, e.g., a System on Chip (SoC). In one example, the chip or SoC may be configured to perform one or more functionalities of the radio as well. For example, the chip or SoC may include one or more elements of the processor and/or one or more elements of the radio. In one example, the processor and the radio may be implemented as part of the chip or SoC.

In embodiments of the present invention, the communication device can be a wearable device, a sensor, small device, a mobile device, and/or any other device, which may be, for example, powered by a battery and/or any other power source having a limited capacity.

In embodiments of the present invention, the communication device can be configured to communicate over one or more narrowband channels, for example, channels with a channel bandwidth of about 200 Kilohertz (KHz). In embodiments of the invention a minimum system bandwidth of 200 kHz on both downlink and uplink can be used. In each direction, the 200 kHz channel can be divided into narrow bandwidth subcarriers, for instance, 48 on the downlink and 36 on the uplink. In the downlink direction, Orthogonal Frequency Division Multiple Access (OFDMA) can be used. In the uplink direction Frequency Division Multiple Access (FDMA) can be used.

More specifically, according to a first aspect the invention relates to a communication device for communicating data over a low power wide area, LPWA, communication network. The communication device comprises: a processor configured to process data; a memory configured to store data; a radio configured to transmit and/or receive data over the LPWA communication network; and a security system. The security system is configured to operate a plurality of logically separated sets of security domains, including a master set of security domains and one or more slave sets of security domains, on the processor and the memory, wherein each set of security domains comprises a processor security domain and a memory security domain, wherein the processor security domain of the master set of security domains is configured to generate on the basis of a cryptographic master key stored in the memory security domain of the master set of security domains for each of the one or more slave sets of security domains a respective cryptographic key for an end-to-end encryption.

Thus, an improved communication device for wireless communication networks based on LPWA technology, in particular narrowband IOT networks, is provided.

The security system can be implemented in hardware and/or software. In an embodiment, the security system can be implemented using virtualization techniques. In a further possible embodiment of the communication device the processor, the memory and the radio are implemented as a system on a chip. In a further possible embodiment the communication device further comprises a communication bus, wherein the communication bus is configured to exchange data between the processor, the memory and the radio.

In a further possible implementation of the communication device according to the first aspect, each of the one or more slave sets of security domains is configured to interact to encrypt data to be transmitted and/or decrypt data received using the respective cryptographic key. In an embodiment, the processor security domain of a respective slave set of security domains is configured to encrypt data to be transmitted and/or decrypt data received using the respective cryptographic key stored in the respective memory security domain of the respective slave set of security domains.

In a further possible implementation of the communication device according to the first aspect, the processor security domain of the master set of security domains is configured to generate the respective cryptographic key on the basis of the cryptographic master key using a symmetric crypto scheme, in particular AES.

In a further possible implementation of the communication device according to the first aspect, the processor security domain of the master set of security domains is configured to generate the respective cryptographic key on the basis of the cryptographic master key using an asymmetric crypto scheme, in particular a RSA crypto scheme or an asymmetric crypto scheme based on elliptic curves.

In a further possible implementation of the communication device according to the first aspect, the processor security domain of the master set of security domains is configured to access the radio for transmitting and/or receiving data over the LPWA communication network, in particular via a base station of the LPWA communication network.

In a further possible implementation of the communication device according to the first aspect, the master set of security domains is further configured to authenticate the communication device within the LPWA communication network.

In a further possible implementation of the communication device according to the first aspect, a cryptographic authentication key is stored in the memory security domain of the master set of security domains and the processor security domain of the master set of security domains is configured to run an authentication application for authenticating the communication device within the LPWA communication network using the cryptographic authentication key.

In a further possible implementation of the communication device according to the first aspect, the cryptographic authentication key used for authenticating the communication device is the cryptographic master key used for deriving the respective cryptographic keys for end-to-end encryption.

In a further possible implementation of the communication device according to the first aspect, the communication device further comprises a sensor configured to collect data, wherein the security system is further configured to restrict access to the sensor to one or more selected sets of the plurality of sets of security domains.

In a further possible implementation of the communication device according to the first aspect, the communication device further comprises an actuator, wherein the security system is further configured to restrict access to the actuator to one or more selected sets of the plurality of sets of security domains.

In a further possible implementation of the communication device according to the first aspect, the processor is configured to implement a real-time execution environment based on a real-time operating system, wherein the security system is configured to operate the respective processor security domains of the plurality of sets of security domains in parallel to the real-time execution environment.

In a further possible implementation of the communication device according to the first aspect, the memory comprises in addition to the respective memory security domains of the plurality of sets of security domains a real-time memory portion that is configured to be accessible from the real-time execution environment and the respective processor security domains of the plurality of sets of security domains.

In a further possible implementation of the communication device according to the first aspect, the memory comprises a RAM, a ROM and/or a Flash memory.

According to a second aspect the invention relates to a corresponding method of operating a communication device for communicating data over a low power wide area, LPWA, communication network, wherein the communication device comprises a processor configured to process data, a memory configured to store data and a radio configured to transmit and/or receive data over the LPWA communication network. The method comprises operating a plurality of logically separated sets of security domains, including a master set of security domains and one or more slave sets of security domains, on the processor and the memory, wherein each set of security domains comprises a processor security domain and a memory security domain, wherein the processor security domain of the master set of security domains generates on the basis of a cryptographic master key stored in the memory security domain of the master set of security domains for each of the one or more slave sets of security domains a respective cryptographic key for an end-to-end encryption.

Thus, an improved communication method for wireless communication networks based on LPWA technology, in particular narrowband IOT networks, is provided.

The method according to the second aspect of the invention can be performed by the communication device according to the first aspect of the invention and its different embodiments. Thus, further features of the method according to the second aspect of the invention result directly from the functionality of the communication device according to the first aspect of the invention and its different embodiments and implementation forms. According to a third aspect the invention relates to a computer program product comprising program code for performing the method according to the second aspect of the invention, when executed on a computer or a processor.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a NB IoT communication network comprising a communication device according to an embodiment;
Fig. 2 shows a more detailed schematic diagram of a communication device according to an embodiment; and
Fig. 3 shows a diagram illustrating a method for operating a communication device according to an embodiment.

In the various figures, identical reference signs will be used for identical or at least functionally equivalent features.

### DETAILED DESCRIPTION OF EMBODIMENTS

In the following detailed description, reference is made to the accompanying drawings, which form part of the disclosure, and in which are shown, by way of illustration, specific aspects in which the present invention may be placed. It is understood that other aspects may be utilized and structural or logical changes may be made without departing from the scope of the present invention. The following detailed description, therefore, is not to be taken in a limiting sense, as the scope of the present invention is defined by the appended claims.

For instance, it is understood that a disclosure in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

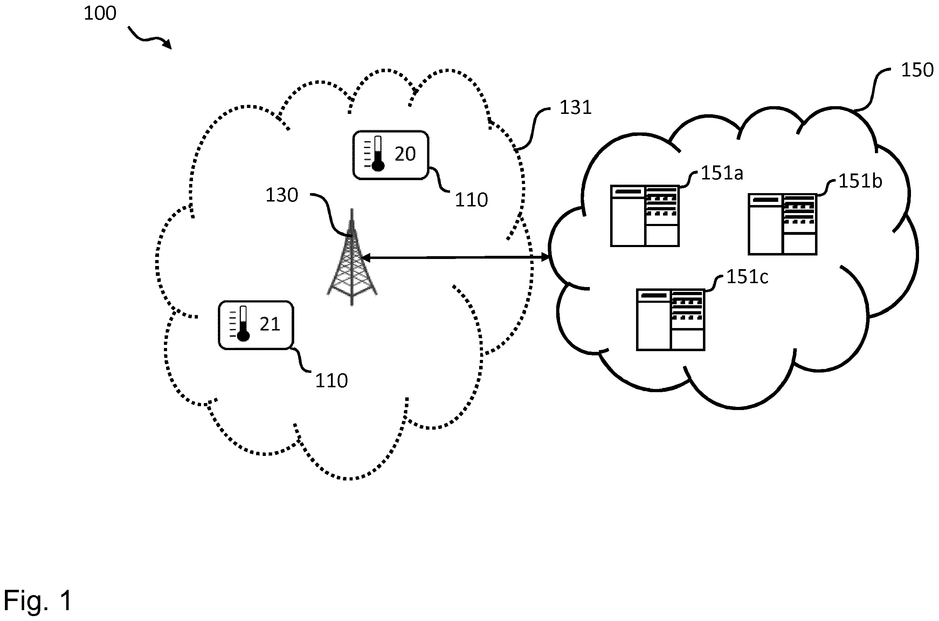

Figure 1 shows a schematic diagram of a cellular communication network 100. The cellular communication network 100 is a low-power wide-area (LPWA) communication network 100, in particular a LPWA communication network 100 based on narrowband (NB) IoT technology, as described, for instance, in the 3GPP technical report TR 45.820.

The cellular communication network 100 comprises a radio access network 131, a core network 150 and a plurality of NB IoT communication devices 110. In the exemplary embodiment shown in figure 1, the plurality of NB IoT communication devices are smart temperature sensors configured to monitor temperature data and to provide the temperature data via the core network 150 of the NB IoT communication network 100 to one or more network entities 151a, 151b, in particular network servers, configured to collect and analyze the temperature data from the plurality of NB IoT communication devices 110.

For the sake of clarity figure 1 shows only a single exemplary base station 130, which is part of the radio access network 131. In other embodiments the radio access network 131 can comprises a plurality of base stations similar to the exemplary base station 130 shown in figure 1.

The core network 150 comprises entities or functions for operating the NB IoT communication network 100. In the exemplary embodiment, shown in figure 1 the core network 150 comprises an authentication entity 151c configured to perform an authentication procedure with each of the NB IoT communication devices 110 before granting full access to the NB IoT communication network 100.

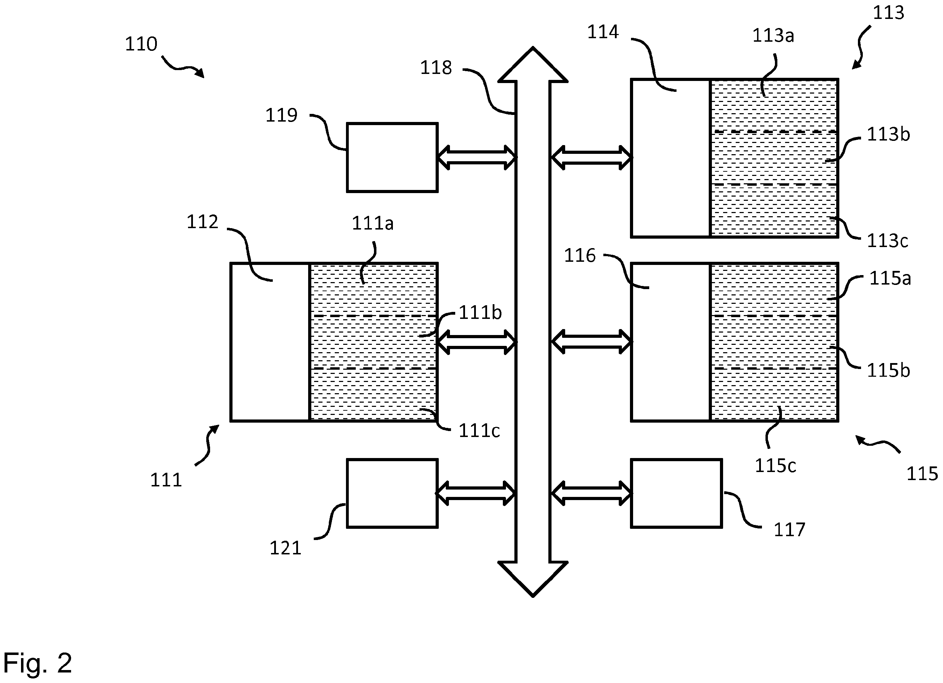

Under further reference to figure 2 in the following an embodiment of the NB IoT communication device 110 will be described. The communication device 110 comprises a processor 111 configured to process data and running applications, a memory comprising a RAM 113 and a Flash memory 115 configured to store volatile and non-volatile data (in particular executable application code), respectively, and a radio 117 configured to transmit and/or receive data over the NB IoT communication network 100. In an embodiment, the radio 117 can be configured to use one or more subcarriers of a channel bandwidth of about 200 Kilohertz (KHz) to communicate with the base station 130 on the basis of an OFDMA scheme in the downlink direction and on the basis of a FDMA scheme in the uplink direction. Alternatively to or in addition to the Flash memory 115 the communication device 110a can comprise a ROM as well.

In an embodiment, the processor 111, the RAM 113, the Flash memory 115 and/or the radio 117 can be implemented as a system on a chip. As illustrated in figure 2, in an embodiment the communication device 110a further comprises a communication bus system 118 configured to provide for the flow of data between the processor 111, the RAM 113, the Flash memory 115 and the radio 117.

The communication device 110 further comprises a security system configured to operate a plurality of logically separated sets of security domains 111a-c, 113a-c, 115a-c, including a master set of security domains 111a, 113a, 115a and one or more slave sets of security domains 111b,c, 113b,c, 115b,c, on the processor 111 and the memory, i.e. the volatile RAM 113 and the non-volatile Flash memory 115, wherein each set of security domains comprises a processor security domain 111a-c and a memory security domain 113a-c, 115a-c. In the exemplary embodiment shown in figure 2 the security system comprises three sets of logically separated security domains 111a-c, 113a-c, 115a-c, namely the master set of security domains 111a, 113a, 115a, comprising a processor security domain 111a, a RAM security domain 113a and a Flash memory security domain 115a, and two slave sets of security domains 111b,c, 113b,c, 115b,c, comprising a respective processor security domain 111b,c, a respective RAM security domain 113b,c and a respective Flash memory security domain 115b,c. As already mentioned, the respective security domains of a set of security domains, for instance, the processor security domain 111a, the RAM security domain 113a and the Flash memory security domain 115a of the master set of security domains are logically separated from the security domains of the other sets of security domains.

The processor security domain 111a of the master set of security domains 111a, 113a, 115a is configured to generate on the basis of a cryptographic master key stored in the Flash memory security domain 115a a respective cryptographic key for each of the slave sets of security domains 111b,c, 113b,c, 115b,c, namely a first cryptographic key for the first slave set of security domains 111b, 113b, 115b and a second cryptographic key for the second slave set of security domains 111c, 113c, 115c. Preferably, the cryptographic master key is stored in the Flash memory security domain 115a of the master set of security domains 111a, 113a, 115a as part of the production process of the communication device 110, i.e. before the communication device 110 is used in the field. Alternatively, the cryptographic master key or a new cryptographic master key can be provided to the master set of security domains 111a, 113a, 115a over the air, once the communication device 110 is used in the field. Thus, in an embodiment, the processor security domain 111a of the master set of security domains is configured to access the radio 117 for transmitting and/or receiving data over the NB IoT communication network 100.

In an embodiment, the respective cryptographic key derived from the cryptographic master key can be stored in the respective Flash memory security domain 115b, 115c of the first slave set of security domains 111b, 113b, 115b and the second slave set of security domains 111c, 113c, 115c, respectively. In an embodiment, the processor security domain 111b of the first slave set of security domains 111b, 113b, 115b can use the first cryptographic key stored in the Flash memory security domain 115b for encrypting data to be transmitted via the radio 117 and/or decrypting encrypted data received via the radio 117. Likewise, in an embodiment, the processor security domain 111c of the second slave set of security domains 111c, 113c, 115c can use the second cryptographic key stored in the Flash memory security domain 115c for encrypting data to be transmitted via the radio 117 and/or decrypting encrypted data received via the radio 117.

Thus, the first and second cryptographic keys derived from the cryptographic master key allow the first and second slave set of security domains 111b,c, 113b,c, 115b,c to implement a respective end-to-end encryption, for instance, with the network entities 151a and 151b, respectively. As will be appreciated, to this end a key management can be implemented in the backend as well for providing the network entities 151a and 151c with the corresponding keys. For instance, the operator of the NB IoT communication network 100 can operate a key repository for providing the network entities 151a and 151b with the corresponding keys used by the first and second slave set of security domains 111b,c, 113b,c, 115b,c.

In an embodiment, the processor security domain 111a of the master set of security domains 111a, 113a, 115a is configured to generate the first and second cryptographic key on the basis of the cryptographic master key using a symmetric crypto scheme, in particular the AES crypto scheme. For instance, in an embodiment, the processor security domain 111a can be configured to generate on the basis of a cryptographic master key of 256 bits a first individual AES key and a second individual AES key.

In another embodiment, the processor security domain 111a of the master set of security domains 111a, 113a, 115a is configured to generate the first and second cryptographic key on the basis of the cryptographic master key using an asymmetric crypto scheme, in particular a RSA crypto scheme or a asymmetric crypto scheme based on elliptic curves.

For instance, in the context of a challenge response scheme a network entity, such as the network entity 151b, can encrypt a randomly selected symmetric cryptographic key using a cryptographic public key of the master set of security domains 111a, 113a, 115a and provide the same to the master set of security domains 111a, 113a, 115a via the radio 117. As the corresponding cryptographic private key is stored as the master cryptographic key in the Flash memory security domain 115a of the master set of security domains 111a, 113a, 115a, the processor security domain 111a of the master set of security domains 111a, 113a, 115a can decrypt the randomly selected symmetric cryptographic key and provide it to one of the slave sets of security domains 111b,c, 113b,c, 115b,c. In an embodiment, the communication device 110 can be configured to acknowledge the successful receipt of the randomly selected symmetric cryptographic key by sending a message to the network entity 151b, wherein the message or at least a portion thereof is encrypted using the randomly selected symmetric cryptographic key.

In an embodiment, the cryptographic public key of the master set of security domains 111a, 113a, 115a of the communication device 110 can be verified using a X.509 certificate provided, for instance, by the operator of the NB IoT communication network 100.

In an embodiment, the master set of security domains 111a, 113a, 115a is further configured to authenticate the communication device 110 within the NB IoT communication network 100. To this end, a cryptographic authentication key can be stored in the Flash memory security domain 115a of the master set of security domains 111a, 113a, 115 and the processor security domain 111a can be configured to run an authentication application for authenticating the communication device 110 using the cryptographic authentication key in a authentication procedure with the authentication entity 151c. In an embodiment, the cryptographic authentication key used for authentication can be the cryptographic master key used for deriving the cryptographic keys for the first and second slave sets of security domains 111b,c, 113b,c, 115b,c.

As mentioned above and illustrated in figure 2, the processor 111 can be configured to implement a real-time execution environment 112 based on a real-time operating system. An application running in the real-time execution environment 112 can access security functions provided by the different sets of security domains, if the application has the corresponding access rights. In the embodiment shown in figure 2, the security system of the communication device 110a is configured to operate the respective processor security domains 111a-c of the three sets of security domains in parallel to the real-time execution environment 112.

As illustrated in figure 2, in an embodiment the communication device 110 can further comprise a sensor 119 and/or an actuator 121. In an embodiment, the security system can be configured to restrict access to the sensor 119 and/or the actuator 121 to one or more selected sets of the plurality of sets of security domains 111a-c, 113a-c, 115a-c.

The security system of the communication device 110 shown in figure 2 can be implemented in hardware and/or software. In an embodiment, the security system can be implemented using virtualization techniques. In an embodiment, the different RAM security domains 113a-c can be provided by different partitions of the RAM 113. In an embodiment, the data in the different RAM security domains 113a-c are accessible using "memory mapped I/O". As will be appreciated, the main purpose of the security system of the communication device 110a and its security domains is to isolate the processing of security critical tasks from standard processing in the real-time execution environment 112. This can be achieved by using a single processor-core having two execution modes, one secure mode and another mode for standard processes. In this case the RAM and registers assigned to the single core are duplicated and one set is assigned to the normal mode, i.e. the real-time execution environment 112, and the other set to the secure execution mode, i.e. the secure execution environment. According to another embodiment, the security system of the communication device 110a and its security domains can be implemented using a multi-processor-core architecture with at least one secure-core with an own RAM, which is dedicated to executing only security-critical processes.

In an embodiment, both the RAM 113 and the Flash memory 115 can comprise in addition to the respective RAM security domains 113a-c and the Flash memory security domains 115a-c a real-time RAM portion 114 and a real-time Flash memory portion 116, which can be accessed from the real-time execution environment 112 of the processor 111 and the respective processor security domains 111a-c of the three sets of security domains.

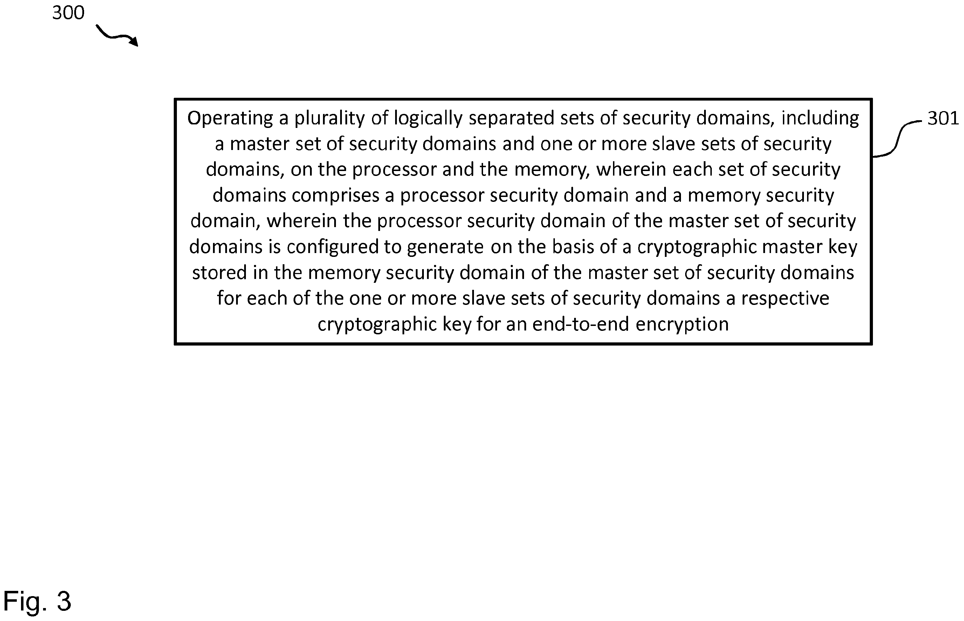

Figure 3 shows a corresponding method 300 of operating the communication device 110 for communicating data over the low power wide area, LPWA, communication network 100. The method 300 comprises a step 301 of operating the plurality of logically separated sets of security domains 111a-c, 113a-c, 115a-c, including the master set of security domains 111a, 113a, 115a and the one or more slave sets of security domains 111b,c, 113b,c, 115b,c, on the processor 111 and the memory 113, 115, wherein each set of security domains comprises a processor security domain 111a-c and a memory security domain 113a-c, 115a-c, wherein the processor security domain 111a of the master set of security domains 111a, 113a, 115a is configured to generate on the basis of a cryptographic master key stored in the memory security domain 113a, 115a of the master set of security domains 111a, 113a, 115a for each of the one or more slave sets of security domains 111b,c, 113b,c, 115b,c a respective cryptographic key for an end-to-end encryption.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention.

## Claims

1. A communication device (110) for communicating data over a low power wide area, LPWA, communication network (100), wherein the communication device (110) comprises:
a processor (111) configured to process data;
a memory (113, 115) configured to store data;
a radio (117) configured to transmit and/or receive data over the LPWA communication network (100); and
a security system configured to operate a plurality of logically separated sets of security domains (111a-c, 113a-c, 115a-c), including a master set of security domains (111a, 113a, 115a) and one or more slave sets of security domains (111b,c, 113b,c, 115b,c), on the processor (111) and the memory (113, 115), wherein each set of security domains comprises a processor security domain (111a-c) and a memory security domain (113a-c, 115a-c), **characterized in that**
the processor security domain (111a) of the master set of security domains (111a, 113a, 115a) is configured to generate on the basis of a cryptographic master key stored in the memory security domain (113a, 115a) of the master set of security domains (111a, 113a, 115a) for each of the one or more slave sets of security domains (111b,c, 113b,c, 115b,c) a respective cryptographic key for an end-to-end encryption.

2. The communication device (110) of claim 1, wherein each of the one or more slave sets of security domains (111b,c, 113b,c, 115b,c) is configured to interact to encrypt data to be transmitted and/or decrypt data received using the respective cryptographic key.

3. The communication device (110) of claim 1 or 2, wherein the processor security domain (111a) of the master set of security domains (111a, 113a, 115a) is configured to generate the respective cryptographic key on the basis of the cryptographic master key using a symmetric crypto scheme, in particular AES.

4. The communication device (110) of claim 1 or 2, wherein the processor security domain (111a) of the master set of security domains (111a, 113a, 115a) is configured to generate the respective cryptographic key on the basis of the cryptographic master key using an asymmetric crypto scheme, in particular RSA or an asymmetric crypto scheme based on elliptic curves.

5. The communication device (110) of any one of the preceding claims, wherein the processor security domain (111a) of the master set of security domains (111a, 113a, 115a) is configured to access the radio (117) for transmitting and/or receiving data over the LPWA communication network (100).

6. The communication device (110) of claim 5, wherein the master set of security domains (111a, 113a, 115a) is further configured to authenticate the communication device (110) within the LPWA communication network (100).

7. The communication device (110) of claim 6, wherein a cryptographic authentication key is stored in the memory security domain (113a, 115a) of the master set of security domains (111a, 113a, 115) and the processor security domain (111a) of the master set of security domains (111a, 113a, 115) is configured to run an authentication application for authenticating the communication device (110) within the LPWA communication network (100) using the cryptographic authentication key.

8. The communication device (110) of claim 7, wherein the cryptographic authentication key is the cryptographic master key.

9. The communication device (110) of any one of the preceding claims, wherein the communication device (110) further comprises a sensor (119) configured to collect data and wherein the security system is further configured to restrict access to the sensor (119) to one or more selected sets of the plurality of sets of security domains (111a-c, 113a-c, 115a-c).

10. The communication device (110) of any one of the preceding claims, wherein the communication device (110) further comprises an actuator (121) and wherein the security system is further configured to restrict access to the actuator (121) to one or more selected sets of the plurality of sets of security domains (111a-c, 113a-c, 115a-c).

11. The communication device (110) of any one of the preceding claims, wherein the processor (111) is configured to implement a real-time execution environment (112) based on a real-time operating system and wherein the security system is configured to operate the respective processor security domains (111a-c) of the plurality of sets of security domains (111a-c, 113a-c, 115a-c) in parallel to the real-time execution environment (112).

12. The communication device (110) of claim 11, wherein the memory (113, 115) comprises in addition to the respective memory security domains (113a-c, 115a-c) of the plurality of sets of security domains (111a-c, 113a-c, 115a-c) a real-time memory portion (114, 116) that is configured to be accessible from the real-time execution environment (112) and the respective processor security domains (111a-c) of the plurality of sets of security domains (111a-c, 113a-c, 115a-c).

13. The communication device (110) of any one of the preceding claims, wherein the memory (113, 115) comprises a RAM (113), a ROM and/or a Flash memory (115).

14. A method (300) of operating a communication device (110) for communicating data over a low power wide area, LPWA, communication network (100), the communication device (110) comprising a processor (111) configured to process data, a memory (113, 115) configured to store data and a radio (117) configured to transmit and/or receive data over the LPWA communication network (100), wherein the method (300) comprises:
operating (301) a plurality of logically separated sets of security domains (111a-c, 113a-c, 115a-c), including a master set of security domains (111a, 113a, 115a) and one or more slave sets of security domains (111b,c, 113b,c, 115b,c), on the processor (111) and the memory (113, 115), wherein each set of security domains comprises a processor security domain (111a-c) and a memory security domain (113a-c, 115a-c), **characterized in that**
the processor security domain (111a) of the master set of security domains (111a, 113a, 115a) generates on the basis of a cryptographic master key stored in the memory security domain (113a, 115a) of the master set of security domains (111a, 113a, 115a) for each of the one or more slave sets of security domains (111b,c, 113b,c, 115b,c) a respective cryptographic key for an end-to-end encryption.

15. A computer program product comprising program code for performing the method (300) of claim 14, when executed on a computer or a processor.

## Patentansprüche

1. Kommunikationsvorrichtung (110) zum Kommunizieren von Daten über ein energiesparendes Weitbereichs-, LPWA, Kommunikationsnetzwerk (100), wobei die Kommunikationsvorrichtung (110) umfasst:
einen Prozessor (111), der konfiguriert ist, Daten zu verarbeiten;
einen Speicher (113, 115), der konfiguriert ist, Daten zu speichern;
ein Funkgerät (117), das konfiguriert ist, Daten über das LPWA-Kommunikationsnetzwerk (100) zu senden und/oder zu empfangen; und
ein Sicherheitssystem, das konfiguriert ist, mehrere logisch getrennte Sätze von Sicherheitsdomänen (111a-c, 113a-c, 115a-c), einschließlich eines Master-Satzes von Sicherheitsdomänen (111a, 113a, 115a) und eines oder mehrerer Slave-Sätze von Sicherheitsdomänen (111b,c, 113b,c, 115b,c), auf dem Prozessor (111) und dem Speicher (113, 115) zu betreiben, wobei jeder Satz von Sicherheitsdomänen eine Prozessorsicherheitsdomäne (111a-c) und eine Speichersicherheitsdomäne (113a-c, 115a-c) umfasst,
**dadurch gekennzeichnet, dass** die Prozessorsicherheitsdomäne (111a) des Master-Satzes von Sicherheitsdomänen (111a, 113a, 115a) konfiguriert ist, basierend auf einen in der Speichersicherheitsdomäne (113a, 115a) des Master-Satzes von Sicherheitsdomänen (111a, 113a, 115a) gespeicherten kryptografischen Hauptschlüssel für jeden der einen oder mehreren Slave-Sätze von Sicherheitsdomänen (111b,c, 113b,c, 115b,c) einen jeweiligen kryptografischen Schlüssel für eine Endezu-Ende-Verschlüsselung zu erzeugen.

2. Kommunikationsvorrichtung (110) nach Anspruch 1, wobei jeder der einen oder mehreren Slave-Sätze von Sicherheitsdomänen (111b,c, 113b,c, 115b,c) konfiguriert ist, zu interagieren, um unter Verwendung des jeweiligen kryptografischen Schlüssel zu sendende Daten zu verschlüsseln und/oder empfangene Daten zu entschlüsseln.

3. Kommunikationsvorrichtung (110) nach Anspruch 1 oder 2, wobei die Prozessorsicherheitsdomäne (111a) des Master-Satzes von Sicherheitsdomänen (111a, 113a, 115a) konfiguriert ist, den jeweiligen kryptografischen Schlüssel basierend auf dem kryptografischen Hauptschlüssel unter Verwendung eines symmetrischen Kryptoschemas, insbesondere AES, zu erzeugen.

4. Kommunikationsvorrichtung (110) nach Anspruch 1 oder 2, wobei die Prozessorsicherheitsdomäne (111a) des Master-Satzes von Sicherheitsdomänen (111a, 113a, 115a) konfiguriert ist, den jeweiligen kryptografischen Schlüssel basierend auf den kryptografischer Hauptschlüssel unter Verwendung eines asymmetrischen Kryptoschemas, insbesondere RSA, oder eines auf elliptischen Kurven basierenden asymmetrischen Kryptoschemas zu erzeugen.

5. Kommunikationsvorrichtung (110) nach einem der vorhergehenden Ansprüche, wobei die Prozessorsicherheitsdomäne (111a) des Master-Satzes von Sicherheitsdomänen (111a, 113a, 115a) konfiguriert ist, zum Senden und/oder Empfangen von Daten über das LPWA-Kommunikationsnetzwerk (100) auf das Funkgerät (117) zuzugreifen.

6. Kommunikationsvorrichtung (110) nach Anspruch 5, wobei der Master-Satz von Sicherheitsdomänen (111a, 113a, 115a) ferner konfiguriert ist, die Kommunikationsvorrichtung (110) innerhalb des LPWA-Kommunikationsnetzwerks (100) zu authentifizieren.

7. Kommunikationsvorrichtung (110) nach Anspruch 6, wobei ein kryptografischer Authentifizierungsschlüssel in der Speichersicherheitsdomäne (113a, 115a) des Master-Satzes von Sicherheitsdomänen (111a, 113a, 115) gespeichert ist, und die Prozessorsicherheitsdomäne (111a) des Master-Satzes von Sicherheitsdomänen (111a, 113a, 115) konfiguriert ist, eine Authentifizierungsanwendung zum Authentifizieren der Kommunikationsvorrichtung (110) innerhalb des LPWA-Kommunikationsnetzwerks (100) unter Verwendung des kryptografischen Authentifizierungsschlüssels auszuführen.

8. Kommunikationsvorrichtung (110) nach Anspruch 7, wobei der kryptografische Authentifizierungsschlüssel der kryptografische Hauptschlüssel ist.

9. Kommunikationsvorrichtung (110) nach einem der vorhergehenden Ansprüche, wobei die Kommunikationsvorrichtung (110) ferner einen Sensor (119) umfasst, der konfiguriert ist, Daten zu sammeln, und wobei das Sicherheitssystem ferner konfiguriert ist, einen Zugriff auf den Sensor (119) auf einen oder mehrere ausgewählte Sätze der mehreren Sätze von Sicherheitsdomänen (111a-c, 113a-c, 115a-c) zu beschränken.

10. Kommunikationsvorrichtung (110) nach einem der vorhergehenden Ansprüche, wobei die Kommunikationsvorrichtung (110) ferner einen Aktuator (121) umfasst, und wobei das Sicherheitssystem ferner konfiguriert ist, einen Zugriff auf den Aktuator (121) auf einen oder mehrere ausgewählte Sätze der mehreren Sätze von Sicherheitsdomänen (111a-c, 113a-c, 115a-c) zu beschränken.

11. Kommunikationsvorrichtung (110) nach einem der vorhergehenden Ansprüche, wobei der Prozessor (111) konfiguriert ist, eine Echtzeit-Ausführungsumgebung basierend auf einem Echtzeit-Betriebssystem zu implementieren, und wobei das Sicherheitssystem konfiguriert ist, die jeweilige Prozessorsicherheitsdomänen (111a-c) der mehreren Sätze von Sicherheitsdomänen (111a-c, 113a-c, 115a-c) parallel zu der Echtzeit-Ausführungsumgebung (112) zu betreiben.

12. Kommunikationsvorrichtung (110) nach Anspruch 11, wobei der Speicher (113, 115) zusätzlich zu den jeweiligen Speichersicherheitsdomänen (113a-c, 115a-c) der mehreren Sätze von Sicherheitsdomänen (111a-c, 113a-c, 115a-c) einen Echtzeit-Speicherabschnitt (114, 116) umfasst, der konfiguriert ist, von der Echtzeit-Ausführungsumgebung (112) und den jeweiligen Prozessorsicherheitsdomänen (111a-c) der mehreren Sätze von Sicherheitsdomänen (111a-c, 113a-c, 115a-c) zugreifbar zu sein.

13. Kommunikationsvorrichtung (110) nach einem der vorhergehenden Ansprüche, wobei der Speicher (113, 115) einen RAM (113), einen ROM und/oder einen Flash-Speicher (115) umfasst.

14. Verfahren (300) zum Betreiben einer Kommunikationsvorrichtung (110) zum Kommunizieren von Daten über ein energiesparendes Weitbereichs-, LPWA, Kommunikationsnetzwerk (100), wobei die Kommunikationsvorrichtung (110) einen Prozessor (111), der konfiguriert ist, Daten zu verarbeiten, einen Speicher (113, 115), der konfiguriert ist, Daten zu speichern, und ein Funkgerät (117), das konfiguriert ist, Daten über das LPWA-Kommunikationsnetzwerk (100) zu senden und/oder zu empfangen, umfasst, wobei das Verfahren (300) umfasst:
Betreiben (301) mehrerer logisch getrennter Sätze von Sicherheitsdomänen (111a-c, 113a-c, 115a-c), einschließlich eines Master-Satzes von Sicherheitsdomänen (111a, 113a, 115a) und eines oder mehrerer Slave-Sätze von Sicherheitsdomänen (111b,c, 113b,c, 115b,c) auf dem Prozessor (111) und dem Speicher (113, 115), wobei jeder Satz von Sicherheitsdomänen eine Prozessorsicherheitsdomäne (111a-c) und eine Speichersicherheitsdomäne (113a-c, 115a-c) umfasst,
**dadurch gekennzeichnet, dass**
die Prozessorsicherheitsdomäne (111a) des Master-Satzes von Sicherheitsdomänen (111a, 113a, 115a) basierend auf einen in der Speichersicherheitsdomäne (113a, 115a) des Master-Satzes von Sicherheitsdomänen (111a, 113a, 115a) gespeicherten kryptografischen Hauptschlüssel für jeden der einen oder mehreren Slave-Sätze von Sicherheitsdomänen (111b,c, 113b,c, 115b,c) einen jeweiligen kryptografischen Schlüssel für eine Ende-zu-Ende-Verschlüsselung erzeugt.

15. Computerprogrammprodukt, umfassend Programmcode zum Durchführen des Verfahrens (300) nach Anspruch 14, wenn es auf einem Computer oder einem Prozessor ausgeführt wird.

## Revendications

1. Dispositif de communication (110) pour communiquer des données via un réseau de communication étendu à faible puissance LPWA (100), dans lequel le dispositif de communication (110) comprend :
un processeur (111) configuré pour traiter des données ;
une mémoire (113, 115) configurée pour mémoriser des données ;
une radio (117) configurée pour transmettre et/ou recevoir des données via le réseau de communication LPWA (100) ; et
un système de sécurité configuré pour faire fonctionner un ou plusieurs ensemble de domaines de sécurité séparés logiquement (111a-c, 113a-c, 115a-c), incluant un premier ensemble de domaines de sécurité maitres (111a, 113a, 115a), sur le processeur (111) et la mémoire (113, 115), dans lequel chaque ensemble de domaines de sécurité comprend un domaine de sécurité de processeur (111a-c) et un domaine de sécurité de mémoire (113a-c, 115a-c),
**caractérisé en ce que** le domaine de sécurité de processeur (111a) de l'ensemble maître de domaines de sécurité (111a, 113a, 115a) est configuré pour générer sur la base d'une clé maître cryptographique mémorisée dans le domaine de sécurité de mémoire (111a, 113a, 115a) pour chacun du ou des ensembles esclaves de domaines de sécurité (111b, c, 113b, c, 115b, c) une clé cryptographique respective pour un cryptage de bout en bout.

2. Dispositif de communication (110) selon la revendication 1, dans lequel chacun du ou des ensembles esclaves de domaines de sécurité (111b,c, 113b,c, 115b,c) est configuré pour interagir afin de crypter des données à transmettre et/décrypter les données reçues en utilisant la clé cryptographique respective.

3. Dispositif de communication (110) selon la revendication 1 ou 2, dans lequel le domaine de sécurité de processeur (111a) de l'ensemble maître de domaines de sécurité (111a, 113a, 115a) est configuré pour générer la clé cryptographique respective sur la base de la clé maitre cryptographique en utilisant un crypto mécanisme symétrique, en particulier AES.

4. Dispositif de communication (110) selon la revendication 1 ou 2, dans lequel le domaine de sécurité de processeur (111a) de l'ensemble maître de domaines de sécurité (111a, 113a, 115a) est configuré pour générer la clé cryptographique respective sur la base de la clé maitre cryptographique en utilisant un crypto mécanisme asymétrique, en particulier RSA ou un crypto mécanisme asymétrique basé sur des courbes elliptiques.

5. Dispositif de communication (110) selon une quelconque des revendications précédentes, dans lequel le domaine de sécurité de processeur (111a) de l'ensemble maître de domaines de sécurité (111a, 113a, 115a) est configuré pour accéder à la radio (117) pour transmettre et/ou recevoir des données via le réseau de communication LPWA (100).

6. Dispositif de communication (110) selon la revendication 5, dans lequel l'ensemble maître de domaines de sécurité (111a, 113a, 115a) est en outre configuré pour authentifier le dispositif de communication (110) à l'intérieur du réseau de communication (100).

7. Dispositif de communication (110) selon la revendication 6, dans lequel une clé d'authentification cryptographique mémorisée dans le domaine de sécurité de mémoire (113a, 115a) de l'ensemble maître de domaines de sécurité (111a, 113a, 115a) et le domaine de sécurité de processeur (111a) de l'ensemble maître de domaines de sécurité (111a, 113a, 115a) est configuré pour exécuter une application d'authentification pour authentifier le dispositif de communication (110) à l'intérieur du réseau de communication LPWA (100) en utilisant la clé d'authentification cryptographique.

8. Dispositif de communication (110) selon la revendication 7, dans lequel la clé d'authentification cryptographique est la clé maître cryptographique.

9. Dispositif de communication (110) selon une quelconque des revendications précédentes, dans lequel le dispositif de communication (110) comprend en outre un capteur (119) configuré pour collecter des données et dans lequel le système de sécurité est en outre configuré pour restreindre l'accès au capteur (119) à un ou plusieurs ensemble sélectionnés de la pluralité d'ensembles de domaines de sécurité (111a-c, 113a-c, 115a-c).

10. Dispositif de communication (110) selon une quelconque des revendications précédentes, dans lequel le dispositif de communication (110) comprend en outre un actionneur (121) et dans lequel le système de sécurité est en outre configuré pour restreindre l'accès à l'actionneur (121) à un ou plusieurs ensembles sélectionnés de la pluralité d'ensembles de domaines de sécurité (111a-c, 113a-c, 115a-c).

11. Dispositif de communication (110) selon une quelconque des revendications précédentes, dans lequel le processeur (111) est configuré pour implémenter un environnement d'exécution en temps réel (112) sur la base d'un système d'exploitation en temps réel et dans lequel le système de sécurité est configuré pour faire fonctionner les domaines de sécurité de processeur respectifs (111a-c) de la pluralité d'ensembles de domaines de sécurité (111a-c, 113a-c, 115a-c) en parallèle à l'environnement d'exécution en temps réel (112).

12. Dispositif de communication (110) selon la revendication 11, dans lequel la mémoire (113, 115) comprend en plus des domaines de sécurité de mémoire respectifs (113a-c, 115a-c) de la pluralité d'ensembles de domaines de sécurité (111a-c, 113a-c, 115a-c) une portion de mémoire en temps réel (114, 116) qui est configurée afin d'être accessible à partir de l'environnement d'exécution en temps réel (112) et les domaines de sécurité de processeur respectifs (111a-c) de la pluralité d'ensembles de domaines de sécurité (111a-c, 113a-c, 115a-c).

13. Dispositif de communication (110) selon une quelconque des revendications précédentes, dans lequel la mémoire (113, 115) comprend une RAM (113), une ROM et/ou une mémoire flash (115).

14. Procédé (300) de fonctionnement d'un dispositif de communication (110) pour communiquer les données via un réseau de communication étendu à faible puissance LPWA (100), le dispositif de communication (110) comprenant un processeur (111) configuré pour traiter des données, une mémoire (113, 115) configurée pour mémoriser des données et une radio (117) configurée pour transmettre et/ou recevoir des données via le réseau de communication LPWA (100), dans lequel le procédé (300) comprend de :
faire fonctionner (301) une pluralité d'ensemble séparés logiquement de domaines de sécurité (111a-c, 113a-c, 115a-c), incluant un ensemble maître de domaines de sécurité (111a, 113a, 115a) et un ou plusieurs ensemble esclaves de domaines de sécurité (111b,c, 113b,c, 115b,c), sur le processeur (111) et la mémoire (113, 115), dans lequel chaque ensemble de domaines de sécurité comprend un domaine de sécurité de processeur (111a-c) et un domaine de sécurité de mémoire (113a-c, 115a-c),
**caractérisé en ce que**
le domaine de sécurité de processeur (111a) de l'ensemble maître de domaines de sécurité (111a, 113a, 115a) génère sur la base d'une clé maître cryptographique mémorisée dans le domaine de sécurité de mémoire (113a, 115a) de l'ensemble maître de domaines de sécurité (111b,c, 113b,c, 115b,c) une clé cryptographique respective pour un cryptage de bout en bout.

15. Produit de programme informatique comprenant du code de programme pour mettre en oeuvre le procédé (300) selon la revendication 14, lorsqu'il est exécuté sur un ordinateur ou un processeur.
